# EUROPEAN PATENT SPECIFICATION

(11) **EP 1 544 262 B1**
(45) Date of publication and mention of the grant of the patent: **15.09.2010**
(21) Application number: 04257857.5
(22) Date of filing: 16.12.2004
(51) Int. Cl.: C09D 11/00

(54) **Liquid vehicle systems for improving latex ink-jet ink frequency response**
Flüssige Trägersysteme zur verbesserung der Frequenzantwort von Latexhaltigen Tintenstrahltinten
Systemes des vehicules liquides pour ameliorer la reponse frequencielle d'encres a base de latex pour imprimante a jet d'encre

(30) Priority: 19.12.2003 US 742109
(43) Date of publication of application: 22.06.2005
(73) Proprietor: HEWLETT-PACKARD DEVELOPMENT COMPANY, L.P., Houston, TX 77070 (US)
(72) Inventor: Cagle, Phillip C., San Marcos, CA 92069 (US); Gardner, John, San Diego, CA 92131 (US); Lee, Shirley, Poway, CA 92064 (US)
(74) Representative: Durville, Guillaume

(56) References cited:
- EP-A- 1 029 903
- WO-A-2004/072134
- GB-A- 2 105 735
- US-A1- 2003 019 395
- US-B1- 6 184 268
- US-B1- 6 548 571

## Description

### FIELD OF THE INVENTION

The present invention relates generally to liquid vehicle systems that can be used to improve the jettability of latex polymers. More particularly, acid functionalized latex polymers can be jetted more effectively from thermal ink-jet architecture by use of the liquid vehicle systems of the present invention.

### BACKGROUND OF THE INVENTION

There are several reasons that ink-jet printing has become a popular way of recording images on various media surfaces, particularly paper. Some of these reasons include low printer noise, capability of high-speed recording, and capability of multi-color recording. Additionally, these advantages can be obtained at a relatively low price to consumers. Though there has been great improvement in ink-jet printing technology, there is still improvement that can be made in many areas.

With respect to ink-jet ink chemistry, the majority of commercial ink-jet inks are water-based. Thus, their constituents are generally water-soluble (as in the case with many dyes) or water dispersible (as in the case with many pigments). Because of their water-based nature, ink-jet ink systems, in general, tend to exhibit poorer image fade and durability when exposed to water or high humidity compared to other photographic or printing methods.

There have been great improvements in the durability of ink-jet inks through incorporation of certain ink-jet compatible latexes. The latex can comprise submicron polymeric particles of high molecular weight that are dispersed in an aqueous fluid, which fluid ultimately becomes at least part of a liquid vehicle of an ink-jet ink. When printed as part of an ink-jet ink, latex particulates can act as a binder, improving the adhesion of pigmented colorants to the media surface. However, such latex compositions can create problems with respect to ink-jet architecture reliability and jettability, as well as with respect to settling of the latex particles over time. For example, ink-jet inks typically have low viscosity to accommodate high frequency jetting and firing chamber refill processes common to ink-jet architecture. Latexes in such vehicles tend to exhibit problems believed to be associated with thermal shear of latex particulates during the jetting process, which can ultimately result in polymeric buildup within the ink-jet architecture. Particularly at higher firing frequencies, i.e. faster printing settings, such aggregation can occur and adversely affect the firing process within the ink-jet architecture, thereby causing such jettability problems.

WO 2004/072134 discloses latex particles having a reactive surfactant covalently bonded to the latex particle surface. This document also discloses an ink-jet ink comprising effective amounts of an ink vehicle, a colorant admixed in the ink vehicle, latex particles dispersed in the ink vehicle, and a reactive surfactant covalently bonded to the surface of the latex particles.

### SUMMARY OF THE INVENTION

The present invention provides a method of ink-jet printing an image, comprising ink-jetting an ink-jet ink onto a media substrate using a thermal ink-jet architecture. The ink-jet ink includes a) an aqueous liquid vehicle having from 0.5 wt% to 10 wt% of an additive selected from the group consisting of i) a C₄ to C₈ 1,2-alkanediol, ii) an alcohol ethoxylate nonionic surfactant or dispersant having at least 15 ethylene oxide units and a HLB of at least 15, and iii) mixtures thereof; b) 0.5 wt% to 15 wt% of methacrylic acid functionalized latex particulates dispersed in the liquid vehicle, said latex particulates including neutralized surface acid groups; and c) 0.1 wt% to 10 wt% of a colorant solvated or dispersed in the liquid vehicle.

The present invention further provides a latex particulate-containing ink-jet ink including a) an aqueous liquid vehicle including 0.5 wt% to 10 wt% of an additive selected from the group consisting of: i) 1,2-hexanediol, ii) an alcohol ethoxylate nonionic surfactant or dispersant having at least 15 ethylene oxide units and a HLB of at least 15; and iii) mixtures thereof; b) 0.5 wt% to 15 wt% of methacrylic acid functionalized latex particulates dispersed in the liquid vehicle, said latex particulates including neutralized surface acid groups; and c) 0.1 wt% to 10 wt% of a colorant solvated or dispersed in the liquid vehicle.

The present invention further provides a system for rapidly printing a latex dispersion, comprising: a) a latex dispersion, including: i) an aqueous liquid vehicle including 0.5 wt% to 10 wt% of an additive selected from the group consisting of: a C₄ to C₈ 1,2-alkanediol, an alcohol ethoxylate nonionic surfactant having at least 15 ethylene oxide units and a HLB of at least 15; and mixtures thereof, and ii) 0.5 wt% to 15 wt% of methacrylic acid functionalized latex particulates dispersed in the liquid vehicle, said latex particulates including neutralized surface acid groups; iii) 0.1 wt% to 10 wt% of a colorant solvated or dispersed in the liquid vehicle; and b) a thermal ink-jet architecture configured for firing the latex dispersion at an average firing frequency greater than 10 kHz.

The present invention further provides the use of an ink-jet ink including a) an aqueous liquid vehicle having from 0.5 wt% to 10 wt% of an additive selected from the group consisting of: i) a C₄ to C₈ 1,2-alkanediol, ii) an alcohol ethoxylate nonionic surfactant or dispersant having at least 15 ethylene oxide units having a HLB of at least 15, and iii) mixtures thereof; b) 0.5 wt% to 15 wt % of methacrylic acid functionalized latex particulates dispersed in the liquid vehicle, said latex particulates including neutralized surface acid groups; and c) 0.1 wt% to 10 wt % of a colorant solvated or dispersed in the liquid vehicle; for ink-jetting onto a media substrate using a thermal ink-jet architecture.

It has been recognized that it would be advantageous to develop liquid vehicles for carrying latex particulates for use in thermal ink-jet architectures, especially when printing at high frequencies. In accordance with this recognition, the present invention relates to a latex particulate-containing ink-jet ink that has a stable mean drop velocity range that does not vary more than 40% when fired from thermal ink-jet architecture. The mean drop velocity range can be determined by comparing an initial drop velocity fired at 0.2 kHz with comparison drop velocities fired at higher firing frequencies up to and including 10 kHz. The ink-jet ink includes an aqueous liquid vehicle, latex particulates including surface acid groups dispersed in the liquid vehicle, and colorant solvated or dispersed in the liquid vehicle as described in claim 5. The liquid vehicle includes from 0.5 wt% to 10 wt% of an additive selected from the group consisting of 1,2-hexanediol, an alcohol ethoxylate nonionic surfactant or dispersant having at least 15 ethylene oxide units and a HLB of at least 15, and mixtures thereof.

In another embodiment, a method of ink-jet printing an image comprises ink-jetting an ink-jet ink onto a media substrate as described in claim 1, wherein the ink-jet ink has a stable mean drop velocity range that does not vary more than 40% when fired from thermal ink-jet architecture. The mean drop velocity range can be determined by comparing an initial drop velocity fired at 0.2 kHz with comparison drop velocities fired at higher firing frequencies up to and including 10 kHz. The ink-jet ink includes an aqueous liquid vehicle, latex particulates dispersed in the liquid vehicle, and colorant solvated or dispersed in the liquid vehicle as described in claim 1. The liquid vehicle includes from 0.5 wt% to 10 wt% of an additive selected from the group consisting of a C₄ to C₈ 1,2-alkanediol, an alcohol ethoxylate nonionic surfactant or dispersant having at least 15 ethylene oxide units and a HLB of at least 15, and mixtures thereof.

In another embodiment, a system for rapidly printing a latex dispersion comprises a latex dispersion and an ink-jet architecture configured for firing the latex dispersion at an average firing frequency greater than 10 kHz as described in claim 10. The latex dispersion includes an aqueous liquid vehicle and latex particulates dispersed in the liquid vehicle as described in claim 10. The aqueous liquid vehicle includes from 0.5 wt% to 10 wt% of an additive selected from the group consisting of a C₄ to C₈ 1,2-alkanediol, an alcohol ethoxylate nonionic surfactant or dispersant having at least 15 ethylene oxide units and a HLB of at least 15, and mixtures thereof.

Additional features and advantages of the invention will be apparent from the detailed description that follows which illustrates, by way of example, features of the invention.

### DETAILED DESCRIPTION OF THE PREFERRED EMBODIMENT(S)

It must be noted that, as used in this specification and the appended claims, the singular forms "a," "an," and "the" include plural referents unless the context clearly dictates otherwise.

As used herein, liquid vehicle" or "ink vehicle" refers to the fluid in which colorants and/or latex particulates or colloids are dissolved or dispersed to form ink-jettable latex dispersions or ink-jet inks in accordance with the present invention. Many liquid vehicles and vehicle components are known in the art. Typical ink vehicles can include a mixture of a variety of different agents, such as surfactants, co-solvents, buffers, biocides, sequestering agents, viscosity modifiers, and water. In addition to the above agents that can be present, the liquid vehicle must include from 0.5 wt% to 10 wt% of at least one additive selected from the group consisting of a C₄ to C₈ 1,2-alkanediol, an alcohol ethoxylate nonionic surfactant or dispersant having at least 15 ethylene oxide units and a HLB of at least 15, and mixtures thereof. Further, in one embodiment, an aqueous phase of a latex dispersion can become part of the liquid vehicle.

"Colorant" can include dyes, pigments, and/or other particulates that may be suspended or dissolved in an ink vehicle containing latex particulates prepared in accordance with embodiments of the present invention. Dyes are typically water soluble, and therefore, can be desirable for use in many embodiments. However, pigments can also be used in other embodiments. Pigments that can be used include self-dispersed pigments and non self-dispersed dispersed pigments. Self-dispersed pigments include those that have been chemically surface modified with a charge or a polymeric grouping. This chemical modification aids the pigment in becoming and/or substantially remaining dispersed in a liquid vehicle. The pigment can also be a non self-dispersed pigment that utilizes a separate and unattached dispersing agent (which can be a polymer, an oligomer, or a surfactant, for example) in the liquid vehicle or physically coated on the surface of the pigment.

The term "freqcel" denotes a reduction in ink drop ejection velocity with increased ink-jet architecture firing frequency. The lowering of drop velocity can be a problem as changes in the trajectory of the fired drops can reduce drop placement accuracy on the print media. Without being bound by one particular theory, freqcel may be attributable to aggregation of latex particles during the firing event

The term "decel" denotes a dropoff in drop velocity after a relatively small number of firing events. For example, drop velocity can start high, and can rapidly plummet to a significantly lower velocity within a short time frame. The decrease in drop velocity can be reversed by stopping the printing action and allowing the drop velocity recover to the initial state prior to firing again.

The term "decap" is a measure of how long a nozzle may remain inactive before plugging and how many ink-jet architecture firings are required to reestablish proper drop ejection.

The term "monomer emulsion" refers to an organic monomer or monomer mix that is emulsified in an aqueous or water phase. Once the organic monomer or monomer mix is polymerized, a latex dispersion is formed.

The term "latex" or "latex dispersion" includes both latex particulates as well as the aqueous medium in which the latex particulates are dispersed. More specifically, a latex is a liquid suspension comprising a liquid (such as water and/or other liquids) and polymeric particulates from 20 nm to 500 nm (preferably from 100 nm to 300 nm) in size, and having a weight average molecular weight from about 10,000 Mw to 2,000,000 Mw (preferably from about 40,000 Mw to 100,000 Mw). Typically, the polymeric particulate can be present in the liquid at from 0.5 wt% to 15 wt%. Such polymeric particulates can comprise a plurality of monomers that are typically randomly polymerized, and can also be crosslinked. When crosslinked, the molecular weight can be even higher than that cited above. Additionally, in one embodiment, the latex component can have a glass transition temperature from about -25°C to 100°C.

The term "latex particulates" or "latex particles" are the polymeric masses that are dispersed in latex dispersion.

The term "acidified latex particulates" refers to neutralized acid groups of latex particulates that can be present at the surface of latex particulates.. The acid groups provide the colloidal latex particles with electrostatic stabilization to avoid particle to particle aggregation during a firing event and during storage.

"HLB" or "Hydrophilic/Lipophilic Balance" is a way of classifying surfactants and other compositions having both a hydrophobic moiety and a hydrophilic moiety. Specifically, the HLB scale ranges from 0 to 40 wherein the products with a low HLB are more oil soluble and products with a higher HLB are more water soluble. The HLB is a numerically calculated number based on the surfactant's molecular structure, and thus, it is not a measured parameter. In accordance with embodiments of the present invention, a "high HLB" for purposes of the present invention includes values of at least 15.

When referring to "stable drop velocity," what is typically meant is that the mean drop velocity range does not varying more than 40% when fired from thermal ink-jet architecture over an entire predetermined firing frequency range. This mean drop velocity range can be determined by comparing an initial drop velocity fired at 0.2 kHz with comparison velocities fired at multiple higher firing frequencies up to and including 10 kHz, or in another embodiment, up to and including 20 kHz. For example, an initial drop velocity of 12 m/s at 0.2 kHz does not drop to less than 8 m/s at higher frequencies up to and including 10 kHz, and in other embodiments, up to and including 20 kHz. This test does not limit whether the ink-jet ink is to be fired within the tested range, nor does it limit whether the ink-jet ink is fired from a particular type of ink-jet architecture. This parameter is merely provided as a means of determining whether a particular ink-jet ink performs acceptably over a wide range of ink-jet frequencies. Firing frequency can be measured by any of a number of instruments, such as a laser velocimeter. Mean drop velocities can be measured for stability using thermal ink-jet drop weights from 1 pL to 40 pL, and more preferably from 4 pL to 20 pL. In one embodiment, the drop weight test can be at about 7 pL or 8 pL.

Concentrations, amounts, and other numerical data may be expressed or presented herein in a range format. It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a concentration range of "0.1 wt% to 5 wt%" should be interpreted to include not only the explicitly recited concentration of 0.1 wt% to 5 wt%, but also include individual concentrations and the sub-ranges within the indicated range. Thus, included in this numerical range are individual concentrations, such as 1 wt%, 2 wt%, 3 wt%, and 4 wt%, and sub-ranges, such as from 0.1 wt% to 1.5 wt%, 1 wt% to 3 wt%, from 2 wt% to 4 wt%, from 3 wt% to 5 wt%, etc. This same principle applies to ranges reciting only one numerical value. For example, a range recited as "less than 5 wt%" should be interpreted to include all values and sub-ranges between 0 wt% and 5 wt%. Furthermore, such an interpretation should apply regardless of the breadth of the range or the characteristics being described.

As used herein, "effective amount" refers to at least the minimal amount of a substance or agent, which is sufficient to achieve a desire effect. For example, an effective amount of a "liquid vehicle" is at least the minimum amount required in order to create an ink-jet ink composition, while maintaining properties necessary for effective ink-jetting.

The term "about" when referring to a numerical value or range is intended to encompass the values resulting from experimental error that can occur when taking measurements.

With these definitions in mind, a latex particulate-containing ink-jet ink is provide that is configured to have a stable mean drop velocity range that does not vary more than 40% when fired from thermal ink-jet architecture. The mean drop velocity range can be determined by comparing an initial drop velocity fired at 0.2 kHz with comparison drop velocities fired at higher firing frequencies up to and including 10 kHz. The ink-jet ink comprises an aqueous liquid vehicle, latex particulates including neutralized surface acid groups dispersed in the liquid vehicle, and colorant solvated or dispersed in the liquid vehicle. The aqueous liquid vehicle typically includes a predominant amount of water, and other additives, including from 0.5 wt% to 10 wt% of an additive selected from the group consisting of 1,2-hexanediol, an alcohol ethoxylate nonionic surfactant or dispersant having at least 15 ethylene oxide units and a HLB of at least 15, and mixtures thereof.

In another embodiment, a method of ink-jet printing an image comprises the step of ink-jetting an ink-jet ink onto a media substrate, wherein the ink-jet ink has a stable mean drop velocity range that does not vary more than 40% when fired from thermal ink-jet architecture. The mean drop velocity range can be determined by comparing an initial drop velocity fired at 0.2 kHz with comparison drop velocities fired at higher firing frequencies up to and including 10 kHz. In one embodiment, the ink-jet ink can have a stable mean drop velocity range that does not vary more than 40% when fired from thermal ink-jet architecture, wherein the mean drop velocity range can be determined by comparing an initial drop velocity fired at 0.2 kHz with comparison drop velocities fired at higher firing frequencies up to and including 20 kHz. In this embodiment, the firing frequency of the ink-jetting step can be from 10 kHz to 20 kHz, or even greater in many embodiments. In another embodiment, the firing frequency of the ink-jetting step can be from 15 kHz to 20 kHz, or even greater. The ink-jet ink includes an aqueous liquid vehicle having from 0.5 wt% to 10 wt% of an additive selected from the group consisting of a C₄ to C₈ 1,2-alkanediol, an alcohol ethoxylate nonionic surfactant or dispersant having at least 15 ethylene oxide units and a HLB of at least 15, and mixtures thereof; latex particulates dispersed in the liquid vehicle; and colorant solvated or dispersed in the liquid vehicle. The latex particulates can include neutralized surface acid groups.

In yet another embodiment, a system for rapidly printing a latex dispersion comprises a latex dispersion and an ink-jet architecture configured for firing the latex dispersion at an average firing frequency greater than 10 kHz. In one embodiment, the firing frequency can be from 10 kHz to 20 kHz, or from 15 kHz to 20 kHz. The ink-jet ink has a stable mean drop velocity range that does not vary more than 40% when fired from thermal ink-jet architecture. The mean drop velocity range can be determined by comparing an initial drop velocity fired at 0.2 kHz with comparison drop velocities fired at higher firing frequencies up to and including 10 kHz, or up to and including 20 kHz. The latex dispersion includes an aqueous liquid vehicle and latex particulates dispersed in the liquid vehicle. The aqueous liquid vehicle indudes from 0.5 wt% to 10 wt% of an additive selected from the group consisting of a C₄ to C₈ 1,2-alkanediol, an alcohol ethoxylate nonionic surfactant or dispersant having at least 15 ethylene oxide units and a HLB of at least 15, and mixtures thereof. The latex particulates includes neutralized surface acid groups.

With respect to each of the embodied compositions and methods described herein, the additive can be one or more of certain classes of compositions. For example, in one embodiment, if a C₄ to C₈ 1,2-alkanediol is selected for use as the liquid vehicle additive, then 1,2-hexanediol can be used. Alternatively, if the nonionic surfactant or dispersant having at least 15 ethylene oxide units is selected as the additive for use, then alcohol ethoxylate surfactants, such as found in many of the TRITON series surfactants, can be used. A general formula for an acceptable exemplary surfactant for use is shown as follows: 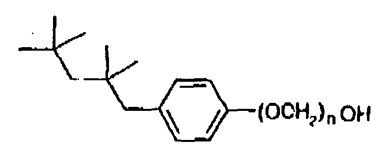 where n can be greater than 15, such as from 15 to 100. Though an octylphenol ethoxylate class of surfactant is shown, other ethoxylated surfactants or dispersants having more than 15 ethylene oxide groups can be used. This is particularly true if the HLB value is at least 15. Other surfactants or dispersants that are alcohol ethoxylate nonionicsurfactants having at least 15 ethylene oxide units and a HLB of at least 15 that can be used include, for example, Tergitol 15-S-40 (Dow), Igepal CO-890 (Dow), Brij 98 (Uniqema), and Solsperse 20,000 (Avecia). Numerous other materials can be selected for use as would be ascertainable by those skilled in the art after considering the present disclosure. A more comprehensive list of other high HLB ethoxylates can be found in McCutcheon's Emulsifiers and Detergents 2003 (North American Edition or International Editions, McPublishing, Glen Rock, NJ).

Further, though two specific types of additives are described as providing good ink-jet functionality to latex dispersions and latex ink-jet inks, other additives can also be used to form the liquid vehicle as well, including a mixture of a variety of different agents, such as other surfactants, other co-solvents, buffers, biocides, sequestering agents, viscosity modifiers, and water. A typical liquid vehicle formulation that can be used with the latex dispersions and latex ink-jet inks described herein can include water, and optionally, one or more additional co-solvents present in total at from 0.1 wt% to 50 wt%, depending on the ink-jet architecture. Further, one or more additional non-ionic, cationic, anionic, or amphoteric surfactant(s) can be present, ranging from 0.01 wt% to 8.0 wt%.

Exemplary of additional co-solvents that can be present include 2-pyrollidinone, LEG-1, glycerol, diethylene glycol, trimethylolpropane, 1,5-pentanediol, and/or the like. In addition to the above exemplary specific co-solvents that can be used, classes of co-solvents that can be used in addition to the additive (the C₄ to C₈ 1,2-alkanediol or the alcohol ethoxylate nonionic surfactant having at least 15 ethylene oxide units and a HLB of at least 15) include aliphatic alcohols, aromatic alcohols, diols, glycol ethers, polyglycol ethers, caprolactams, formamides, acetamides, and long chain alcohols. Examples of such compounds include primary aliphatic alcohols, secondary aliphatic alcohols, 1,2-alcohols, 1,3-alcohols, 1,5-alcohols, ethylene glycol alkyl ethers, propylene glycol alkyl ethers, higher homologs of polyethylene glycol alkyl ethers, N-alkyl caprolactams, unsubstituted caprolactams, both substituted and unsubstituted formamides, both substituted and unsubstituted acetamides, and the like.

One or more of many surfactants can also be used in addition to the C₄ to C₈ 1,2-alkanediol or alcohol ethoxylate nonionic surfactant having at least 15 ethylene oxide units and a HLB of at least 15. Such surfactants include alkyl polyethylene oxides, alkyl phenyl polyethylene oxides, polyethylene oxide block copolymers, acetylenic polyethylene oxides, polyethylene oxide (di)esters, polyethylene oxide amines, protonated polyethylene oxide amines, protonated polyethylene oxide amides, dimethicone copolyols, fluoroalkyl polyethylene oxides, substituted amine oxides, and the like. The amount of surfactant added to the formulation of this invention, if added, can range from 0.01 wt% to 8 wt%. It is to be noted that the surfactant that is described as being usable in the ink vehicle is not the same as the alcohol ethoxylate nonionic surfactant having at least 15 ethylene oxide units and a HLB of at least 15 that can be present, as described previously.

It is to be noted that the latex dispersions and latex ink-jet inks of the present invention inherently include a predominantly aqueous phase (or liquid phase) that can include water and other components, such as surfactants, solvents, etc. Thus, the liquid phase of the latex dispersion can be admixed with liquid vehicle components to form the liquid vehicle, or the liquid phase can become the liquid vehicle upon addition of colorants.

Consistent with the formulation of this invention, various other additives may be employed to optimize the properties of the ink composition for specific applications. Examples of these additives are those added to inhibit the growth of harmful microorganisms. These additives may be biocides, fungicides, and other microbial agents, which are routinely used in ink formulations. Examples of suitable microbial agents include, but are not limited to, Nuosept (Nudex, Inc.), Ucarcide (Union carbide Corp.), Vancide (R.T. Vanderbilt Co.), Proxel (ICI America), and combinations thereof.

Sequestering agents, such as EDTA (ethylene diamine tetraacetic acid), may be included to eliminate the deleterious effects of heavy metal impurities, and buffer solutions may be used to control the pH of the ink. From 0 wt% to 2.0 wt%, for example, can be used. Viscosity modifiers and buffers may also be present, as well as other additives known to those skilled in the art to modify properties of the ink as desired. Such additives can be present at from 0 wt% to 20.0 wt%.

With respect to the colorant that is present, an effective amount of either pigment and/or dye can be used to provide desired color or other property to the ink-jet ink. The colorant is present at from 0.1 wt% to 10.0 wt%.

With reference to the latex particulates that can be present in the latex dispersion or latex-containing ink-jet ink, one or more of many different types of latex can be used. However, latexes specifically adapted for use in ink-jet architecture are preferred. Thus, latex particulates, such as would be present in latex paints or the like, which tend to settle and require stirring, though not outside of the present invention, are less preferred for use.

Latex particulates having surface acid groups tend to be more stable over longer periods of time, and tend to resist aggregation. Thus, neutralized surface acid groups are present on the latex particulates. These acid groups can be present throughout the latex particulates, including on the surfaces, or can be more concentrated at the surfaces. In a more detailed aspect, the latex particulates can be prepared using acid monomers copolymerized with other monomers to form a monomer emulsion, which in turn, is initiated to form the latex particulates. The acid functionalities are neutralized to provide a surface charge on the latex particles. In this embodiment, the acid monomers can be present at from 1 wt% to 15 wt% of total monomers used to form the latex particulates. Typical acids that have been used to acidify the surface of latex particulates included carboxyl acids, though stronger acids can also be used. Carboxylic acids are weak acids that have been fairly effective for use in latex/ink-jet ink systems. For example, methacrylic acid functionalized latex particulates can be formed using 6 wt% methacrylic acid-containing monomers. During preparation, about half of the methacrylic acid monomers will stay in the organic phase, and the balance may migrate to the aqueous phase of the emulsion.

In another more detailed aspect, the latex particulates can be provided by multiple monomers copolymerized to form the latex particulates, wherein the multiple monomers include at least one crosslinking monomer present at from 0.1 wt% to 3 wt% of total monomers used to form the latex particulates. Such a crosslinking monomer does not provide the acid groups, but can provide other properties to the latex that can be desirable for ink-jet applications.

A specific example of latex particulates that can be used include those prepared using an emulsion monomer mix of various weight ratios of styrene, hexyl methacrylate, ethylene glycol dimethacrylate, and methacrylic acid, which are copolymerized to form the latex. Typically, the styrene and the hexyl methacrylate monomers can provide the bulk of the latex particulate, and the ethylene glycol dimethacrylate and methyl methacrylate can be copolymerized therewith in smaller amounts. In this embodiment, the acid group is provided by the methacrylic acid. Though this latex particulate example is provided, other combinations of monomers can be used to form latex particulates. Exemplary monomers that can be used include styrenes, C₁ to C₈ alkyl methacrylates, C₁ to C₈ alkyl acrylates, ethylene glycol methacrylates and dimethacrylates, methacrylic acids, acrylic acids, and the like.

Ink-jet inks containing latex polymers and other latex dispersions have traditionally had issues with respect to reliable jetting. For example, latex inks often show decel, a reversible phenomena where the drop velocity across a print swath decreases over time. This can often occur to the point of inhibiting printing altogether. Once printing is stopped and started again, the initial drop velocity will recover until further printing over time occurs. A similar problem is termed freqcel, where the drop velocity (but not the drop mass) is frequency dependent. Inks exhibiting freqcel typically have high velocity at lower firing frequencies, but also exhibit diminished or unstable drop velocity at higher firing frequencies. Both decel and freqcel result in undesirable drop placement, image quality, and nozzle reliability. These problems can be reduced using the liquid vehicle system of the present invention.

Other aspects of the latexes of the present invention can include properties such as desirable glass transition temperature, particulate density, and dielectric constant. For example, in one embodiment, the polymer glass transition temperature of the latex particulates can be in the range of -20°C to +30°C, the latex particulates can be within a density range from 0.9 to 1.1 g/cm³, the particle surface dielectric constant of the latex particulates can be below 2.8. These properties can be selected individually or in combination to contribute to desired ink performance relative to thermal shear stability, freqcel, decel, decap, particle settling, and co-solvent resistance.

As a note, thermal ink-jet systems are quite different in their jetting properties than piezo ink-jet systems. As such, latex particulates that are effective for use in piezo ink-jet systems are not necessarily effective for use with thermal ink-jet ink systems. However, the converse is not necessarily true. In other words, latex particulates that work well with thermal ink-jet systems are more likely to work with piezo systems than *vice versa.* Therefore, the selection or manufacture of latex particulates for use with thermal ink-jet systems often requires more care, as thermal ink-jet systems are less forgiving than piezo ink-jet systems.

### EXAMPLES

The following examples illustrate embodiments of the invention that are presently known. Thus, these examples should not be considered as limitations of the present invention, but are merely in place to teach how to make the best-known compositions of the present invention based upon current experimental data. As such, a representative number of compositions and their method of manufacture are disclosed herein.

### Example 1 - Preparation of latex incorporating methacrylic acid monomer

About 1160 mL of water is heated in a reactor to 90°C. A solution of 1.39 g of potassium persulfate initiator in 160 mL of water is also prepared. An initial 32 mL of this initiator solution is added to the reactor bath and stirred. Separately, a first monomer emulsion comprising 80 g styrene, 292 g hexyl methacrylate, 4 g ethylene glycol dimethacrylate, 24 g of methacrylic acid, 1.6 g isooctylthio glycolate chain transfer agent, and 9.98 g of 30% Rhodafac RS 710 is prepared in 159.4 mL water. The monomer emulsion is added dropwise to the reaction vessel over a 30 minute period and stirred. Simultaneously, 129.4 g of the initiator solution is dropwise added to the reaction vessel over the same period. The reaction is stirred and maintained at 90°C for 3 hours. The reaction is then allowed to cool to 50°C. Potassium hydroxide (50% in water) is then added to bring the formed latex solution to a pH of 8.5. The contents are cooled to ambient temperature, and the latex solution is subsequently filtered with a 200 mesh filter to obtain a 20.9% solids latex dispersion including latex particulates with an average particle size of about 230 nm by light scattering.

### Example 2 - Preparation of latex-containing ink-jet ink with 1,2-hexanediol

About 3 wt% solids of the latex prepared in accordance with Example 1 is formulated into inks containing 6 wt% 1,2-hexanediol, 6 wt% 2-pyrrolidinone, 4 wt% glycerol, 4 wt% ethoxylated glycerol, 0.5 wt% secondary alcohol ethoxylate surfactant, 0.1 wt% fluorinated surfactant, and 3 wt% pigment dispersion. The pH is adjusted to 8.5 with dilute KOH. The balance of each ink-jet ink is water.

### Example 3 - Printing results using latex-containing ink-jet ink with 6 wt% 1, 2-hexanediol

The ink-jet ink of Examples 2 is introduced into a thermal ink-jet architecture and printed using a series of drop frequency diagnostics on paper. Even at relatively low drop volume printing, e.g., < 8 pL, and high printing frequency, e.g., > 10 kHz or even 15 kHz, the formulation of Examples 2 can be successfully printed on a media substrate with acceptable decel and freqcel response. More specifically, the presence of 1 ,2-hexanediol at the amount described in Example 2 provides improvement of ink-jet frequency response at a broad range from 0.2 kHz to 20 kHz.

### Example 4 - Preparation of latex-containing ink-jet inks with octylphenol ethoxylate class surfactant

Seven different ink-jet inks are prepared in accordance with the following formulation. About 3 wt% solids of the latex prepared in accordance with Example 1 is formulated into inks containing 2 wt% of a octylphenol ethoxylate surfactant, 6 wt% 2-pyrrolidinone, 4 wt% glycerol, 4 wt% ethoxylated glycerol, 0.5 wt% secondary alcohol ethoxylate surfactant, 0.1 wt% fluorinated surfactant, and 3 wt% pigment dispersion. Each ink-jet ink is identical except for the ethylene oxide chain length of the surfactant used. More specifically, each of the seven ink-jet inks contain 2 wt% of an octylphenol ethoxylate having an average length of 5, 7.5, 9.5, 16, 30, 35, or 55 ethylene oxide (EO) units. The pH of each ink-jet ink is adjusted to 8.5 with dilute KOH. The balance of each ink-jet ink is water.

### Examele 5 - Printing results using various latex-containing ink-jet ink with various TRITON class surfactants

The seven ink-jet inks prepared in accordance with Example 4 are warmed to 55°C, and are jetted at a 7 pL drop weight from a thermal ink-jet architecture over frequencies ranging from 0.2 kHz to 20 kHz to determine what drop velocity at the various frequencies, if any, can be sustained. A desirable result would include an ink-jet ink that can be jetted over the entire frequency range tested with a relatively consistent drop velocity, e.g., stable mean drop velocity not varying more than 40% as the frequency is increased from an initial 0.2 kHz through 10 kHz, and preferably from an initial 0.2 kHz through 20 kHz. Table 1 below depicts data collected in one such test, as follows:

**Table 1 ― Drop velocity v. firing frequency as a function of alkylphenol ethoxylate (EO) chain length**

| | **55 EO units** | **35 EO units** | **30 EO units** | **16 EO units** | * **9.5 EO units** | * **7.5 EO units** | * **5 EO units** |
|---|---|---|---|---|---|---|---|
| Frequency (kHz) | Velocity (m/s) | Velocity (m/s) | Velocity (m/s) | Velocity (m/s) | Velocity (m/s) | Velocity (m/s) | Velocity (m/s) |
| 0.2 | 11.9 | 11.9 | 10.6 | 9.6 | 6.7 | 7.1 | 5 |
| 1 | 10.6 | 10.4 | 10.6 | 8.8 | 6.7 | 7.5 | 5 |
| 2 | 10.0 | 10.6 | 9.4 | 8.8 | 6.1 | 7.1 | 0 |
| 4 | 9.6 | 10.6 | 9.4 | 8.1 | 3.3 | 5.4 | 0 |
| 6 | 9.6 | 10.6 | 9.4 | 7.9 | 0 | 0 | 0 |
| 8 | 9.6 | 10.6 | 9.4 | 7.7 | 0 | 0 | 0 |
| 10 | 9.6 | 10.6 | 9.4 | 7.7 | 0 | 0 | 0 |
| 12 | 9.2 | 10.6 | 9.4 | 0 | 0 | 0 | 0 |
| 14 | 9.2 | 10.6 | 9.4 | 0 | 0 | 0 | 0 |
| 16 | 9.2 | 7.9 | 9.4 | 0 | 0 | 0 | 0 |
| 18 | 8.8 | 8.3 | 9.4 | 0 | 0 | 0 | 0 |
| 20 | 8.4 | 8.4 | 9.2 | 0 | 0 | 0 | 0 |

| | | | | | | | |
|---|---|---|---|---|---|---|---|
| * = Comparative Examples | | | | | | | |

Acceptable jetting properties at and around 6 kHz to 10 kHz and greater is a desirable characteristic. Additionally, providing an ink-jet ink that performs well over wider ranges of frequencies is also a desirable characteristic. With these characteristics in mind, in this example, the average firing frequencies are acceptable when using the surfactants having ethylene oxide chains that are greater than about 15 ethylene oxide (EO) units. Further, at 30 ethylene oxide units or greater, the acceptable firing frequencies can be achieved across the entire firing frequency range tested, i.e. from 0.2 kHz to 20 kHz. Acceptable firing frequency response can also be achieved at even higher average firing frequencies.

## Claims

1. A method of ink-jet printing an image, comprising ink-jetting an ink-jet ink onto a media substrate using a thermal ink-jet architecture, said ink-jet ink including
a) an aqueous liquid vehicle having from 0.5 wt% to 10 wt% of an additive selected from the group consisting of:
i) a C₄ to C₈ 1,2-alkanediol,
ii) an alcohol ethoxylate nonionic surfactant or dispersant having at least 15 ethylene oxide units and a HLB of at least 15, and
iii) mixtures thereof;
b) 0.5 wt% to 15 wt% of methacrylic acid functionalized latex particulates dispersed in the liquid vehicle, said latex particulates including neutralized surface acid groups; and
c) 0.1 wt% to 10 wt% of a colorant solvated or dispersed in the liquid vehicle.

2. A method as in claim 1, wherein the additive is the C₄ to C₈ 1,2-alkanediol and is present at from 2 wt% to 8 wt%.

3. A method as in claim 1, wherein the additive is the nonionic surfactant or dispersant and is present at from 0.5 wt% to 5 wt%.

4. A method as in claim 1, wherein the thermal ink-jet architecture has an average firing frequency greater than 10 kHz.

5. A latex particulate-containing ink-jet ink including
a) an aqueous liquid vehicle including 0.5 wt% to 10 wt% of an additive selected from the group consisting of:
i) 1,2-hexanediol,
ii) an alcohol ethoxylate nonionic surfactant or dispersant having at least 15 ethylene oxide units and a HLB of at least 15; and
iii) mixtures thereof;
b) 0.5 wt% to 15 wt% of methacrylic acid functionalized latex particulates dispersed in the liquid vehicle, said latex particulates including neutralized surface acid groups; and
c) 0.1 wt% to 10 wt% of a colorant solvated or dispersed in the liquid vehicle.

6. A latex particulate-containing ink-jet ink as in claim 5, wherein the additive is the alcohol ethoxylate nonionic surfactant or dispersant.

7. A latex particulate-containing ink-jet ink as in claim 6, wherein the nonionic surfactant or dispersant is an alcohol ethoxylate having from 30 to 100 ethylene oxide units.

8. A latex particulate-containing ink-jet ink as in claim 5, wherein the surface acid groups of the latex particulates are provided by acid monomers copolymerized with other monomers to form the latex particulates, said acid monomers being present at from 1 wt% to 15 wt% of total monomers used to form the latex particulates.

9. A latex particulate-containing ink-jet ink as in claim 5, wherein the latex particulates are provided by multiple monomers copolymerized to form the latex particulates, said multiple monomers including at least one crosslinking monomer present at from 0.1 wt% to 3 wt% of total monomers used to form the latex particulates.

10. A system for rapidly printing a latex dispersion, comprising:
a) a latex dispersion, including:
i) an aqueous liquid vehicle including 0.5 wt% to 10 wt% of an additive selected from the group consisting of:
a C₄ to C₈ 1,2-alkanediol,
an alcohol ethoxylate nonionic surfactant having at least 15 ethylene oxide units and a HLB of at least 15; and
mixtures thereof, and
ii) 0.5 wt% to 15 wt% of methacrylic acid functionalized latex particulates dispersed in the liquid vehicle, said latex particulates including neutralized surface acid groups;
iii) 0.1 wt% to 10 wt% of a colorant solvated or dispersed in the liquid vehicle; and
b) a thermal ink-jet architecture configured for firing the latex dispersion at an average firing frequency greater than 10 kHz.

11. A system as in claim 10, wherein the additive is C₄ to C₈ 1,2-alkanediol.

12. A system as in claim 10, wherein the additive is the nonionic surfactant having at least 15 ethylene oxide units.

13. A system as in claim 10, wherein said ink-jet architecture is configured for firing the latex dispersion at a frequency greater than 15 kHz.

14. Use of an ink-jet ink including
a) an aqueous liquid vehicle having from 0.5 wt% to 10 wt% of an additive selected from the group consisting of:
i) a C₄ to C₈ 1,2-alkanediol,
ii) an alcohol ethoxylate nonionic surfactant or dispersant having at least 15 ethylene oxide units having a HLB of at least 15, and
iii) mixtures thereof;
b) 0.5 wt% to 15 wt % of methacrylic acid functionalized latex particulates dispersed in the liquid vehicle, said latex particulates including neutralized surface acid groups; and
c) 0.1 wt% to 10 wt % of a colorant solvated or dispersed in the liquid vehicle; for ink-jetting onto a media substrate using a thermal ink-jet architecture.

15. The use as in claim 14, wherein the thermal ink-jet architecture has an average firing frequency greater than 10 kHz.

## Patentansprüche

1. Ein Verfahren zum Tintenstrahldrucken eines Bildes, umfassend das Tintenausstoßen einer Tintenstrahltinte auf ein Mediumsubstrat unter Verwendung einer thermischen Tintenstrahlarchitektur, wobei die Tintenstrahltinte umfasst:
a) eine wässrige flüssige Trägersubstanz von 0,5 Gew-% bis 10 Gew-% eines Additivs ausgewählt aus der Gruppe bestehend aus:
i) einem C₄ bis C₈ 1,2-Alkandiol,
ii) einem Alkohol-Ethoxylat-Niotensid oder Dispergens, das mindestens 15 Ethylenoxid-Einheiten und einen HLB von mindestens 15 aufweist, und
iii) Gemische davon;
b) 0,5 Gew-% bis 15 Gew-% an Methacrylsäure funktionalisierten Latexpartikeln dispergiert in der flüssigen Trägersubstanz, wobei die Latexpartikel neutralisierte Oberflächensäure-Gruppen enthalten; und
c) 0,1 Gew-% bis 10 Gew-% eines Farbstoffs solvatisiert oder dispergiert in der flüssigen Trägersubstanz.

2. Verfahren wie in Anspruch 1, wobei das Additiv das C₄ bis C₈ 1,2-Alkandiol ist und dieses von 2 Gew-% bis 8 Gew-% vorhanden ist.

3. Verfahren wie in Anspruch 1, wobei das Additiv das Niotensid oder Dispergens ist und dieses von 0,5 Gew-% bis 5 Gew-% vorhanden ist.

4. Verfahren wie in Anspruch 1, wobei die thermische Tintenstrahlarchitektur eine durchschnittliche Abfeuerungsfrequenz von größer als 10 kHz aufweist.

5. Eine Latexpartikel enthaltende Tintenstrahltinte umfassend
a) eine wässrige flüssige Trägersubstanz, die von 0,5 Gew-% bis 10 Gew-% eines Additivs enthält, ausgewählt aus der Gruppe bestehend aus:
i) 1,2-Hexandiol,
ii) einem Alkohol-Ethoxylat-Niotensid oder Dispergens, das mindestens 15 Ethylenoxid-Einheiten und einen HLB von mindestens 15 aufweist; und
iii) Gemische davon;
b) 0,5 Gew-% bis 15 Gew-% an Methacrylsäure funktionalisierten Latexpartikeln dispergiert in der flüssigen Trägersubstanz, wobei die Latexpartikel neutralisierte Oberflächensäure-Gruppen enthalten; und
c) 0,1 Gew-% bis 10 Gew-% eines Farbstoffs solvatisiert oder dispergiert in der flüssigen Trägersubstanz.

6. Eine Latexpartikel enthaltende Tintenstrahltinte wie in Anspruch 5, wobei das Additiv das Alkohol-Ethoxylat-Niotensid oder Dispergens ist.

7. Eine Latexpartikel enthaltende Tintenstrahltinte wie in Anspruch 6, wobei das Niotensid oder Dispergens ein 30 bis 100 Ethylenoxid-Einheiten aufweisendes Alkohol-Ethoxylat ist.

8. Eine Latexpartikel enthaltende Tintenstrahltinte wie in Anspruch 5, wobei die Oberflächensäure-Gruppen der Latexpartikel durch Säuremonomere bereitgestellt werden, die mit anderen Monomeren copolymerisiert sind, um die Latexpartikel zu bilden, wobei die Säuremonomere 1 Gew-% bis 15 Gew-% der Gesamtmonomere betragen, die verwendet werden, um die Latexpartikel zu bilden.

9. Eine Latexpartikel enthaltende Tintenstrahltinte wie in Anspruch 5, wobei die Latexpartikel durch mehrere Monomere bereitgestellt werden, die copolymerisiert sind, um die Latexpartikel zu bilden, wobei die mehreren Monomere mindestens ein quervemetzendes Monomer enthalten, das 0,1 Gew-% bis 3 Gew-% der Gesamtmonomere beträgt, die verwendet werden, um die Latexpartikel zu bilden.

10. Ein System, um schnell eine Latex-Dispersion zu drucken, umfassend:
a) eine Latex-Dispersion einschließlich:
i) eine wässrige flüssige Trägersubstanz, die von 0,5 Gew-% bis 10 Gew-% eines Additivs enthält, ausgewählt aus der Gruppe bestehend aus:
einem C₄ bis C₈ 1,2-Alkandiol,
einem Alkohol-Ethoxylat-Niotensid, das mindestens 15 Ethylenoxid-Einheiten und einen HLB von mindestens 15 aufweist; und
Gemische davon und
ii) 0,5 Gew-% bis 15 Gew-% an Methacrylsäure funktionalisierten Latexpartikeln dispergiert in der flüssigen Trägersubstanz, wobei die Latexpartikel neutralisierte Oberflächensäure-Gruppen enthalten;
iii) 0,1 Gew-% bis 10 Gew-% eines Farbstoffs solvatisiert oder dispergiert in der flüssigen Trägersubstanz; und
b) eine thermische Tintenstrahlarchitektur, die konfiguriert ist, die Latex-Dispersion bei einer durchschnittlichen Abfeuerungsfrequenz von größer als 10 kHz abzufeuern.

11. System wie in Anspruch 10, wobei das Additiv C₄ bis C₈ 1,2-Alkandiol ist.

12. System wie in Anspruch 10, wobei das Additiv das Niotensid ist, welches mindestens 15 Ethylenoxid-Einheiten aufweist.

13. System wie in Anspruch 10, wobei die Tintenstrahlarchitektur konfiguriert ist, die Latex-Dispersion mit einer Frequenz von größer als 15 kHz abzufeuern.

14. Die Verwendung einer Tintenstrahltinte, umfassend
a) eine wässrige flüssige Trägersubstanz von 0,5 Gew-% bis 10 Gew-% eines Additivs ausgewählt aus der Gruppe bestehend aus:
i) einem C₄ bis C₈ 1,2-Alkandiol,
ii) einem Alkohol-Ethoxylat-Niotensid oder Dispergens, das mindestens 15 Ethylenoxid-Einheiten und einen HLB von mindestens 15 aufweist, und
iii) Gemische davon;
b) 0,5 Gew-% bis 15 Gew-% an Methacrylsäure funktionalisierten Latexpartikeln dispergiert in der flüssigen Trägersubstanz, wobei die Latexpartikel neutralisierte Oberflächensäure-Gruppen enthalten; und
c) 0,1 Gew-% bis 10 Gew-% eines Farbstoffs solvatisiert oder dispergiert in der flüssigen Trägersubstanz;
zum Tintenausstoßen auf ein Mediumsubstrat unter Verwendung einer thermischen Tintenstrahlarchitektur.

15. Verwendung wie in Anspruch 14, wobei die thermische Tintenstrahlarchitektur eine durchschnittliche Abfeuerungsfrequenz von größer als 10 kHz aufweist.

## Revendications

1. Procédé d'impression à jet d'encre d'une image, comprenant la projection d'une encre jet d'encre sur un substrat de support à l'aide d'une architecture à jet d'encre thermique, ladite encre jet d'encre comprenant
a) un véhicule liquide aqueux ayant de 0,5 % en poids à 10 % en poids d'un additif sélectionné dans le groupe constitué par :
i) un 1,2-alcanediol en C₄-C₈,
ii) un tensioactif ou un dispersant anionique à base d'éthoxylate d'alcool ayant au moins 15 unités d'oxyde d'éthylène et un HLB d'au moins 15, et
iii) des mélanges de ceux-ci ;
b) de 0,5 % en poids à 15 % en poids de particules de latex fonctionnalisées par l'acide méthacrylique dispersées dans le véhicule liquide, lesdites particules de latex comprenant des groupes acides de surface neutralisés ; et
c) de 0,1 % en poids à 10 % en poids d'un colorant solvaté ou dispersé dans le véhicule liquide.

2. Procédé selon la revendication 1, dans lequel l'additif est le 1,2-alcanediol en C₄-C₈ et est présent à une concentration allant de 2 % en poids à 8 % en poids.

3. Procédé selon la revendication 1, dans lequel l'additif est le tensioactif ou le dispersant anionique et est présent à une concentration allant de 0,5 % en poids à 5 % en poids.

4. Procédé selon la revendication 1, dans lequel l'architecture à jet d'encre thermique a une fréquence de chauffage moyenne supérieure à 10 kHz.

5. Encre jet d'encre contenant des particules de latex comprenant
a) un véhicule liquide aqueux comprenant de 0,5 % en poids à 10 % en poids d'un additif sélectionné dans le groupe constitué par :
i) le 1,2-hexanediol,
ii) un tensioactif ou un dispersant anionique à base d'éthoxylate d'alcool ayant au moins 15 unités d'oxyde d'éthylène et un HLB d'au moins 15 ; et
iii) des mélanges de ceux-ci ;
b) de 0,5 % en poids à 15 % en poids de particules de latex fonctionnalisées par l'acide méthacrylique dispersées dans le véhicule liquide, lesdites particules de latex comprenant des groupes acides de surface neutralisés ; et
c) de 0,1 % en poids à 10 % en poids d'un colorant solvaté ou dispersé dans le véhicule liquide.

6. Encre jet d'encre contenant des particules de latex selon la revendication 5, dans laquelle l'additif est le tensioactif ou le dispersant anionique à base d'éthoxylate d'alcool.

7. Encre jet d'encre contenant des particules de latex selon la revendication 6, dans laquelle le tensioactif ou le dispersant anionique est un éthoxylate d'alcool ayant de 30 à 100 unités d'oxyde d'éthylène.

8. Encre jet d'encre contenant des particules de latex selon la revendication 5, dans laquelle les groupes acides de surface des particules de latex sont fournis par des monomères acides copolymérisés avec d'autres monomères pour former les particules de latex, lesdits monomères acides étant présents à une concentration allant de 1 % en poids à 15 % en poids par rapport à la quantité totale de monomères utilisés pour former les particules de latex.

9. Encre jet d'encre contenant des particules de latex selon la revendication 5, dans laquelle les particules de latex sont fournies par de multiples monomères copolymérisés pour former les particules de latex, lesdits multiples monomères comprenant au moins un monomère de réticulation présent à une concentration allant de 0,1 % en poids à 3 % en poids par rapport à la quantité totale de monomères utilisés pour former les particules de latex.

10. Système pour imprimer rapidement une dispersion de latex, comprenant :
a) une dispersion de latex, comprenant :
i) un véhicule liquide aqueux comprenant de 0,5 % en poids à 10 % en poids d'un additif sélectionné dans le groupe constitué par :
un 1,2-alcanediol en C₄-C₈,
un tensioactif anionique à base d'éthoxylate d'alcool ayant au moins 15 unités d'oxyde d'éthylène et un HLB d'au moins 15 ; et
des mélanges de ceux-ci, et
ii) de 0,5 % en poids à 15 % en poids de particules de latex fonctionnalisées par l'acide méthacrylique dispersées dans le véhicule liquide, lesdites particules de latex comprenant des groupes acides de surface neutralisés ;
iii) de 0,1 % en poids à 10 % en poids d'un colorant solvaté ou dispersé dans le véhicule liquide ; et
b) une architecture à jet d'encre thermique configurée pour chauffer la dispersion de latex à une fréquence de chauffage moyenne supérieure à 10 kHz.

11. Système selon la revendication 10, dans lequel l'additif est le 1,2-alcanediol en C₄-C₈.

12. Système selon la revendication 10, dans lequel l'additif est le tensioactif anionique ayant au moins 15 unités d'oxyde d'éthylène.

13. Système selon la revendication 10, dans lequel ladite architecture à jet d'encre est configurée pour chauffer la dispersion de latex à une fréquence supérieure à 15 kHz.

14. Utilisation d'une encre jet d'encre comprenant
a) un véhicule liquide aqueux ayant de 0,5 % en poids à 10 % en poids d'un additif sélectionné dans le groupe constitué par :
i) un 1,2-alcanediol en C₄-C₈,
ii) un tensioactif ou un dispersant anionique à base d'éthoxylate d'alcool ayant au moins 15 unités d'oxyde d'éthylène ayant un HLB d'au moins 15, et
iii) des mélanges de ceux-ci ;
b) de 0,5 % en poids à 15 % en poids de particules de latex fonctionnalisées par l'acide méthacrylique dispersées dans le véhicule liquide, lesdites particules de latex comprenant des groupes acides de surface neutralisés ; et
c) de 0,1 % en poids à 10 % en poids d'un colorant solvaté ou dispersé dans le véhicule liquide ; pour projeter une encre jet d'encre sur un substrat de support à l'aide d'une architecture à jet d'encre thermique.

15. Utilisation selon la revendication 14, dans laquelle l'architecture àjet d'encre thermique a une fréquence de chauffage moyenne supérieure à 10 kHz.
